# EUROPÄISCHE PATENTSCHRIFT

(11) **EP 3 350 462 B1**
(45) Veröffentlichungstag und Bekanntmachung des Hinweises auf die Patenterteilung: **12.07.2023**
(21) Anmeldenummer: 16784376.2
(22) Anmeldetag: 07.09.2016
(51) Int. Cl.: F16B 45/02, F16B 1/00

(54) **HAKEN IN VERBINDUNG MIT EINEM IN DAS HAKENINNERE EINZUBRINGENDEN ELEMENT**
HOOK IN CONJUNCTION WITH AN ELEMENT TO BE INSERTED INTO THE HOOK INTERIOR
CROCHET COMBINÉ À UN ÉLÉMENT À LOGER À L'INTÉRIEUR DU CROCHET

(30) Priorität: 10.09.2015 AT 5912015
(43) Veröffentlichungstag der Anmeldung: 25.07.2018
(73) Patentinhaber: Easyclic GmbH, 4710 Grieskirchen (AT)
(72) Erfinder: BERNDORFER, Wolfgang, 4723 Natternbach (AT); KOLLER, Johannes, 4792 Münzkirchen (AT)
(74) Vertreter: Burgstaller, Peter
(86) Internationale Anmeldenummer: PCT/AT2016/060051
(87) Internationale Veröffentlichungsnummer: WO 2017/041125

(56) Entgegenhaltungen:
- WO-A2-2013/093342
- DE-C- 884 591
- US-A1- 2008 250 615
- US-A1- 2009 041 557
- US-A1- 2010 016 134

## Beschreibung

Die hier offenbarte Erfindung betrifft einen Haken in Verbindung mit einem in das Hakeninnere einzubringenden Element, wobei der Haken eine Öffnung und ein um einen Drehpunkt gelagertes Verschlusselement aufweist,
über welche Öffnung das Element in das Hakeninnere eingebracht werden kann,
mittels welchem Verschlusselement die Öffnung verschließbar ist und zum Einbringen des Elementes in das Hakeninnere die Öffnung öffenbar ist,
wobei der Haken ein am Verschlusselement angeordnetes Adhäsionselement umfasst,
welches Adhäsionselement vom Drehpunkt beabstandet ist,

F2668560 und WÖ2013067641 offenbaren jeweils einen Haken (Karabiner) zwecks eines in das Hakeninnere einzubringenden Elementes.

US2008250615A1 offenbart einen Haken mit einem an der Verschlusselementinnenseite angeordneten Element. Es findet sich in US2008250615A1 kein Hinweis auf eine Anordnung des Magneten in einem Abstand zu einem Drehpunkt des Verschlusselementes.

DE884591C offenbart einen Haken ohne Verschlusselement. Der Haken weist einen in das Hakeninnere wirkenden Magneten auf, mittels welchem Magneten ein in den Haken eingebrachtes Element gesichert werden kann.

Die in WO2013/093342 offenbarte Lösung basiert darauf, dass am Element ein Magnet zur Sicherung im Haken eingebracht ist.

US20090041557 beschreibt einen Haken ohne Verschlusselement, wobei ein in das Hakeninnere eingebrachtes Element durch einen am Haken angeordneten Magneten gesichert wird.

Beim Einbringen eines Elementes in den Haken muss dieses durch die Öffnung in das Hakeninnere eingeführt werden. Die im Folgenden offenbarte Erfindung stellt sich die Aufgabe, das Führen des Elementes durch die Öffnung für den Benutzer zu vereinfachen.

Die erste Teilaufgabe hierzu wird durch ein Positionieren des Elementes in eine Position angrenzend zu der Öffnung gelöst.

Erfindungsgemäß wird dies durch den Anspruch 1 erreicht.

Von der zu der Öffnung angrenzenden Position kann der Benutzer unter Überwindung der Adhäsionskraft zwischen dem Haken und dem Element das Element in das Hakeninnere einbringen. Das Element kann ein Ring, eine Öse oder ein Seil sein. Ebenso kann das einzubringende Element ein weiterer Karabiner oder ein weiterer Haken sein.

Das Adhäsionselement ist in einem Hakenteilbereich angeordnet, von welchem Hakenteilbereich ein am Adhäsionselement lösbar gehaltenes Element durch eine im Wesentlichen gerade Bewegung in das Hakeninnere bewegt werden kann.

Der Benutzer kann mit seiner Hand eine im Wesentlichen gerade Bewegung auf das Element aufbringen. Das der im Wesentlichen geraden Bewegung der Hand folgende Element kann während des Einbringens in das Hakeninnere von der im Wesentlichen geraden Bewegung der Hand des Benutzers geringfügig abweichen. In der Hauptsache folgt jedoch die Bewegung des Elementes der Bewegung des Benutzers gerade.

Der Haken kann als Adhäsionselement ein erstes Klettverschlusselement und das Element ein zweites Klettverschlusselement umfassen.

Der Haken kann als Adhäsionselement eine Klebefläche umfassen.

Der Haken kann als Adhäsionselement einen ersten Magneten mit einer ersten Polung umfassen, wobei das Element einen zweiten Magneten mit einer zweiten Polung umfassen kann. Die erste Polung und die zweite Polung sind unterschiedlich, sodass der erste Magnet den zweiten Magneten anzieht. Der erste Magnet bringt somit einen im Wirkungsfeld des Magnetfeldes situierten zweiten Magneten in die an die Öffnung angrenzende Position.

Die Erfindung schließt auch ein, dass das Verschlusselement ein Magnet oder das einzubringende Element aus einem magnetisierbaren Material hergestellt sind.

Der Haken kann ein bewegliches Verschlusselement umfassen, welches Verschlusselement in seiner Schließstellung die Öffnung verschließt, während die Öffnung bei einer Öffnungsstellung des Verschlusselementes zum Passieren des Elementes offen ist.

Das Verschlusselement kann relativ zum Haken verschiebbar und/oder verdrehbar sein. Aus der Verschiebbarkeit und/oder Verdrehbarkeit des Verschlusselementes sind weitere an den jeweiligen Anwendungsfall angepasste Bewegungsformen des Verschlusselementes wie ein Verschwenken oder ein Klappen des Verschlusselementes für den Fachmann ableitbar. Ein Haken umfassend ein Verschlusselement ist beispielsweise als Karabiner, Schäkel et cetera nach dem Stand der Technik bekannt.

Das Adhäsionselement ist an der Verschlusselementaußenseite des Verschlusselementes angeordnet.

Bei Verwendung eines ersten Magneten als Adhäsionselement wird vorzugsweise nur ein außerhalb des Hakeninneren befindliches Element von dem ersten Magneten angezogen. Ein im Hakeninneren befindliches, somit bereits in den Haken eingebrachtes Element wird bei einer solchen Anordnung des ersten Magneten nicht von der Magnetwirkung des ersten Magneten erfasst. Die zweite Teilaufgabe der Erfindung liegt darin, dass das in einer an das Verschlusselement angrenzenden Position befindliche Element durch eine Kraftaufbringung auf das Element und auf den Haken in das Hakeninnere eingebracht werden kann. Das Adhäsionselement ist hierzu vorzugsweise in einem an die Öffnung angrenzenden Hakenteilbereich angeordnet, sodass das Element durch eine einfache, im Wesentlichen gerade Bewegung vom Adhäsionselement in das Hakeninnere bewegt werden kann.

So muss der Benutzer vorzugsweise zum Einbringen des Elementes das Verschlusselement nicht verschieben. Dies stellt für den Benutzer eine Vereinfachung des Vorganges des Einführens des Elementes dar, zumal das Verschlusselement in Abhängigkeit von dessen Größe nicht so leicht greifbar ist wie beispielsweise der Haken oder das Element. Der Benutzer kann auch über ein am Element oder Haken angeschlossenes Seil eine Zugkraft auf den Haken und das Element aufbringen.

Das Verschlusselement ist um einen Drehpunkt drehbar gelagert, welcher Drehpunkt von der angrenzenden Position beabstandet ist. Nach der Positionierung des einzubringenden Elementes in eine an das Verschlusselement angrenzende Position zieht der Benutzer das einzubringende Element bei gleichzeitiger Drehung und somit Öffnen des Verschlusselementes in das Hakeninnere. Die durch das Ziehen des Elementes auf das Element aufgebrachte Kraft bewirkt ein Kräftemoment, welches Kräftemoment das drehbare Verschlusselement durch Drehen öffnet.

Das verschiebbare Verschlusselement kann in der angrenzenden Position eine in Richtung Hakeninneres weisende schräge Fläche aufweisen. Die durch Ziehen des einzubringenden Elementes aufgebrachte Kraft bewirkt ein Verschieben des Verschlusselementes von der Schließstellung in die Öffnungsstellung.

Das Verschlusselement kann nach dem Einbringen des Elementes durch eine Feder verschlossen werden.

In den nachstehenden Figuren sind die folgenden Elemente durch die vorangestellten Bezugszeichen gekennzeichnet. Die Figuren dienen lediglich der Veranschaulichung des Gegenstandes der Erfindung. Die Figuren sind keinesfalls einschränkend auf den Gegenstand der Erfindung zu werten.
1 Haken
2 Verschlusselement
3 einzubringendes Element
4 Hakeninneres
5 Schließstellung
6 Öffnungsstellung
7 an das Verschlusselement angrenzender Hakenteilbereich
8 erster Magnet
9 zweiter Magnet
10 angrenzende Position
11 Verschlusselementaußenseite
12 Hakenaußenseite
13 Ring
14 Drehpunkt
15 Magnetfeld
16 Öse
17 Öffnung
18 Adhäsionselement
19 Bewegung
20 Zugkraft

Figur 1 zeigt eine erste nicht beanspruchte Ausführungsform eines Hakens in Verbindung mit einem Ring.

Figur 2 und Figur 3 zeigen eine zweite Ausführungsform des erfindungsgemäßen Hakens umfassend ein drehbares Verschlusselement in Verbindung mit einem Ring.

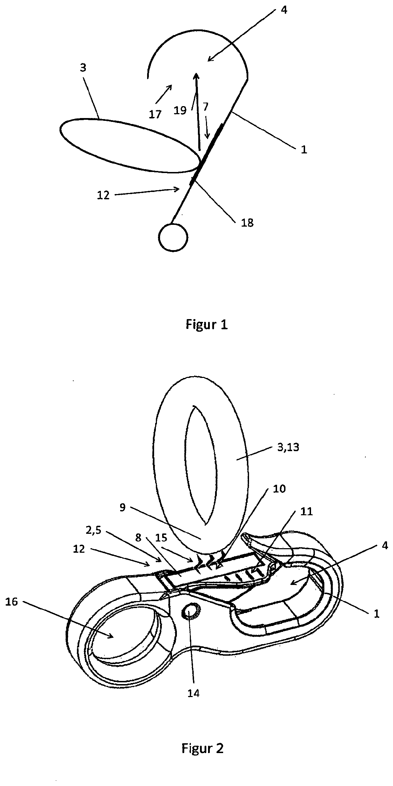

Figur 1 zeigt eine Ansicht eines Hakens 1 in Verbindung mit einem in das Hakeninnere 4 einzubringenden Element 3. Das einzubringende Element 3 ist in der in Figur 1 dargestellten Ausführungsform ein Ring 13.

Der Haken 1 weist eine Öffnung 17 auf, über welche Öffnung 17 der Ring 13 in das Hakeninnere 4 eingebracht werden kann. Das Hakeninnere 4 kann definiert werden als jener Bereich des Hakens 1, welcher von einem gebogenen Bereich des Hakens 1 und der Öffnung 17 begrenzt ist. Ein im Hakeninneren 4 befindliches Element 3 und der Haken 1 können wechselseitig mit einer Kraft beaufschlagt werden.

Der Haken umfasst ein Adhäsionselement 18, welches Adhäsionselement 18 in einem an die Öffnung 17 angrenzenden Hakenteilbereich 7 angeordnet ist. Bei der in Figur 1 gezeigten Ausführungsform ist das Adhäsionselement eine Klebefläche, durch welche Klebefläche - wie in Figur 1 sichtbar - das Element in einer an die Öffnung 17 angrenzenden Position 10 lösbar gehalten wird. Das Adhäsionselement 18 ist vorteilhaft in einem Hakenteilbereich 7 angeordnet, von welchem Hakenteilbereich 7 ein am Adhäsionselement lösbar gehaltenes Element 3 durch eine gerade Bewegung 19 in das Hakeninnere 4 bewegt werden kann.

Der Fachmann erkennt, dass zum Einbringen des Ringes 13 in das Hakeninnere 4 die Größen des Ringes 13 und die Öffnungsweite wechselseitig abgestimmt sein müssen. Figur 1 zeigt den vorteilhaften Fall, dass der Ring 13 größer ist als die Öffnungsweite des Hakens 1.

Figur 2 zeigt eine dreidimensionale Ansicht einer zweiten Ausführungsform des erfindungsgemäßen Hakens 1 umfassend ein Verschlusselement 2 in Verbindung mit einem Ring 13 als das in das Hakeninnere 4 einzubringende Element 3. Der Haken 1 und das um einen Drehpunkt 14 drehbare Verschlusselement 2 als solche weisen die Form eines nach dem Stand der Technik bekannten Karabiners auf. Der Haken 1 umfasst weiters eine Öse 16.

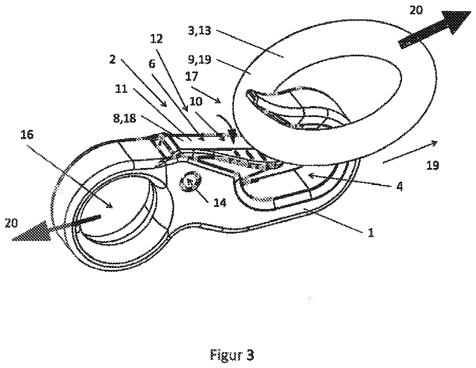

Ähnlich wie bei einem Karabiner nach dem Stand der Technik ist das Verschlusselement 2 von einer in Figur 2 gezeigten Schließstellung 5 in eine in Figur 3 dargestellte Öffnungsstellung 6 bewegbar. Der Haken 1 und das Verschlusselement 2 bilden eine geschlossene geometrische Form, welche geschlossene Form das Hakeninnere 4 definiert. Ein in das Hakeninnere 4 eingebrachtes Element 3 kann nur nach Öffnen des Verschlusselementes 2 aus dem Hakeninneren 4 entfernt werden.

Das Verschlusselement 2 umfasst einen ersten Magneten 8 mit einer zum Element 3 gerichteten ersten Polung. Der Ring als das einzubringende Element 3 umfasst ein magnetisierbares Material als zweiten Magneten 9 mit einer zum Verschlusselement 2 gerichteten zweiten Polung. Der Fachmann wählt die erste Polung und die zweite Polung nach der gängigen Lehre so, dass der Ring 13 als einzubringendes Element 3 vom ersten Magneten 8 in eine an das Verschlusselement 2 angrenzende Position 10 angezogen wird. Der erste Magnet 8 und der zweite Magnet 9 wirken als Adhäsionselemente.

Die in Figur 2 gezeigte Ausführungsform zeichnet sich dadurch aus, dass der erste Magnet 8 an der Verschlusselementaußenseite 11 angeordnet ist. Es wird somit nur ein Element 3, welches benachbart zu der Verschlusselementaußenseite 11 angeordnet ist, von der Wirkung des Magnetfeldes 15 erfasst. Die Wirkung des Magnetfeldes 15 erstreckt sich nicht hinreichend stark in das Hakeninnere 4, sodass ein im Hakeninneren 4 befindliches Element 3 erfasst werden würde und zum Verschlusselement 2 gezogen werden würde. Hierdurch wird die Verwendung des Karabiners mit einem in Hakeninneren 4 befindlichen Element 3 nicht durch die Anordnung des ersten Magneten 8 im Verschlusselement 2 verändert.

Figur 2 zeigt den Ring 13 unmittelbar vor Erreichen der angrenzenden Position 10, in welcher Position 10 sich der Ring 13 und der erste Magnet 8 berühren. Es ist die Position 10 in Figur 2 dennoch eingetragen. Figur 2 zeigt somit den Moment, in welchem das Element 3 in die an das Verschlusselement 2 angrenzende Position 10 durch den Magnetismus bewegt wird.

Figur 3 zeigt die in Figur 2 gezeigte Ausführungsform des Hakens 1 umfassend ein Verschlusselement 2 während des Einbringens des Elementes 3 in das Hakeninnere 4 durch eine gerade Bewegung 19. Das in der in der Öffnungsstellung 6 befindliche Verschlusselement 3 und der Haken 1 sind durch eine Öffnung 17 beabstandet, über welche Öffnung 17 das Element 3 in das Hakeninnere 4 eingebracht wird.

Das Verschlusselement 2 ist um einen Drehpunkt 14 drehbar gelagert, welcher Drehpunkt 14 von der angrenzenden Position 10 beabstandet ist. Zufolge einer Zugkraft 20, welche einerseits an der Öse und andererseits am Ring 13 angreift, entsteht eine Drehmomentenkraft, welche das Verschlusselement von der in Figur 2 gezeigten Schließstellung in die in Figur 3 gezeigte Öffnungsstellung bewegt. Der Ring 13 wird durch die Öffnung 17 in das Hakeninnere unter Überwindung des zwischen dem ersten Magneten 8 und dem zweiten Magneten 9 wirkenden Magnetfeldes gezogen. Die auf den Ring 13 aufgebrachte Bewegung 19 von Position 10 in das Hakeninnere 4 ist linear, d.h. die Bewegung 19 wird durch keine Elemente des Hakens 1 behindert.

Das Verschlusselement ist weiters mit einer in Figur 2 und Figur 3 nicht dargestellten Feder gekoppelt, welche Feder nach dem Einbringen des Elementes das Verschlusselement von der Öffnungsstellung 6 in die Schließstellung 5 bewegt.

## Patentansprüche

1. Haken (1) in Verbindung mit einem in das Hakeninnere (4) einzubringenden Element (3), wobei der Haken (1) eine Öffnung (17) und ein um einen Drehpunkt (14) gelagertes Verschlusselement (2) aufweist,
über welche Öffnung (17) das Element (3) in das Hakeninnere (4) eingebracht werden kann,
mittels welchem Verschlusselement (2) die Öffnung (17) verschließbar ist und zum Einbringen des Elementes (3) in das Hakeninnere (4) die Öffnung (17) öffenbar ist,
wobei der Haken (1) ein am Verschlusselement (2) angeordnetes Adhäsionselement (18) umfasst,
welches Adhäsionselement (18) vom Drehpunkt (14) beabstandet ist, wobei das Verschlusselement (2) ausschließlich an der Verschlusselementaußenseite (11) das Adhäsionselement (18) mit einer zum Element (3) gerichteten Adhäsionsfläche zum Bringen des Elementes in eine an die Öffnung (17) angrenzende Position (10) umfasst,
welche angrenzende Position (10) vom Drehpunkt (14) beabstandet ist,
sodass das am Adhäsionselement (18) lösbar gehaltene und vom Drehpunkt (14) beabstandete Element (3) durch eine, eine gerade Bewegung (19) des Elementes (3) hervorrufende, am Element (3) angreifende Zugkraft (20) unter Aufbringung eines Drehmomentes zum Öffnen des Verschlusselementes (2) in das Hakeninnere (4) bewegbar ist.

2. Haken (1) in Verbindung mit einem einzubringenden Element (3) nach Anspruch 1,
**dadurch gekennzeichnet, dass** der Haken (1) als Adhäsionselement (18) ein erstes Klettverschlusselement und das Element (3) ein zweites Klettverschlusselement umfasst.

3. Haken (1) in Verbindung mit einem einzubringenden Element (3) nach einem der Ansprüche 1 bis 2, **dadurch gekennzeichnet, dass** der Haken (1) als Adhäsionselement (18) einen ersten Magneten (8) umfasst, wobei das Element (3) einen zweiten Magneten (9) umfasst.

4. Haken (1) in Verbindung mit einem einzubringenden Element (3) nach einem der Ansprüche 1 bis 3, **dadurch gekennzeichnet, dass** das Verschlusselement (2) in der angrenzenden Position (10) eine in Richtung Hakeninneres (4) weisende schräge Fläche aufweist.

5. Haken (1) in Verbindung mit einem einzubringenden Element (3) nach einem der Ansprüche 1 bis 4, **dadurch gekennzeichnet, dass** das Verschlusselement (2) nach dem Einbringen des Elementes (3) durch eine Feder verschlossen wird.

6. Haken (1) in Verbindung mit einem einzubringenden Element (3) nach einem der Ansprüche 1 bis 5, **dadurch gekennzeichnet, dass** das Element (3) ein Ring (13), eine Öse (16) oder ein Seil ist.

## Claims

1. A hook (1) associated with an element (3) to be inserted into the hook interior (4), the hook (1) having an opening (17) and a closure element (2) supported around a pivot (14),
via which opening (17) the element (3) can be inserted into the hook interior (4),
using which closure element (2) the opening (17) is closeable and the opening (17) is openable to insert the element (3) into the hook interior (17),
the hook (1) comprising an adhesion element (18) disposed at the closure element (2), which adhesion element (18) is spaced apart from the pivot (14),
wherein the closure element (2) comprises, exclusively at the outer closure element side (11), the adhesion element (18) with an adhesion surface facing the element (3) to bring the element into a position (10) adjacent to the opening (17),
which adjacent position (10) is spaced apart from the pivot (14),
so that the element (3) releasably retained at the adhesion element (18) and spaced apart from the pivot (14) is movable into the hook interior (4) by a tractive force (20) acting at the element (3) and evoking straight movement (19) of the element (3) while applying torque to open the closure element (2).

2. The hook (1) associated with an element (3) to be inserted according to claim 1, **characterised in that** the hook (1) comprises a first hook-and-loop closures element as an adhesion element (18) and the element (3) comprises a second hook-and-loop closure element.

3. The hook (1) associated with an element (3) to be inserted according to any one of claims 1 and 2, **characterised in that** the hook (1) comprises a first magnet (8) as an adhesion element (18), wherein the element (3) comprises a second magnet (9).

4. The hook (1) associated with an element (3) to be inserted according to any one of claims 1 to 3, **characterised in that** the closure element (2) has, in the adjacent position (10), an oblique surface facing the hook interior (4).

5. The hook (1) associated with an element (3) to be inserted according to any one of claims 1 to 4, **characterised in that** the closure element (2) is closed by a spring after the element (3) has been inserted.

6. The hook (1) associated with an element (3) to be inserted according to any one of claims 1 to 5, **characterised in that** the element (3) is a ring (13), an eyelet (16) or a rope.

## Revendications

1. Crochet (1) associé à un élément (3) à insérer à l'intérieur du crochet (4), le crochet (1) présentant une ouverture (17) et un élément de fermeture (2) logé autour d'un point de rotation (14),
par laquelle ouverture (17) l'élément (3) peut être introduit à l'intérieur du crochet (4), au moyen duquel élément de fermeture (2) l'ouverture (17) peut être fermée et peut être ouverte pour l'introduction de l'élément (3) dans l'intérieur du crochet (4),
ledit crochet (1) comprenant un élément d'adhérence (18) disposé sur l'élément de fermeture (2),
lequel élément d'adhérence (18) est espacé du point de rotation (14),
ledit élément de fermeture (2) comprenant, exclusivement sur le côté extérieur (11) de l'élément de fermeture, l'élément d'adhérence (18) avec une surface d'adhérence orientée vers l'élément (3) pour amener l'élément dans une position (10) adjacente à l'ouverture (17), laquelle position adjacente (10) est espacée du point de rotation (14)
de sorte que l'élément (3) maintenu de manière amovible sur l'élément d'adhérence (18) et espacé du point de rotation (14) peut être déplacé vers l'intérieur du crochet (4) par une force de traction (20) agissant sur l'élément (3) et provoquant un mouvement rectiligne (19) de l'élément (3), en appliquant un moment de rotation pour ouvrir l'élément de fermeture (2).

2. Crochet (1) associé à un élément (3) à insérer selon la revendication 1, **caractérisé en ce que** le crochet (1) comprend comme élément d'adhésion (18) un premier élément de fermeture auto-agrippante et l'élément (3) comprend un deuxième élément de fermeture auto-agrippante.

3. Crochet (1) associé à un élément (3) à insérer selon l'une des revendications 1 à 2,
**caractérisé en ce que** le crochet (1) comprend comme élément d'adhésion (18) un premier aimant (8), l'élément (3) comprenant un deuxième aimant (9).

4. Crochet (1) associé à un élément à insérer (3) selon l'une des revendications 1 à 3,
**caractérisé en ce que** l'élément de fermeture (2) présente, dans la position adjacente (10), une surface inclinée orientée vers l'intérieur du crochet (4).

5. Crochet (1) associé à un élément (3) à insérer selon l'une des revendications 1 à 4,
**caractérisé en ce que** l'élément de fermeture (2) est fermé par un ressort après l'insertion de l'élément (3).

6. Crochet (1) associé à un élément (3) à insérer selon l'une des revendications 1 à 5, **caractérisé en ce que** l'élément (3) est un anneau (13), un oeillet (16) ou une corde.
